# EUROPEAN PATENT APPLICATION

(11) **EP 2 640 039 A1**
(43) Date of publication of application: **18.09.2013**
(21) Application number: 12744723.3
(22) Date of filing: 06.02.2012
(51) Int. Cl.: H04M 1/00, G04G 5/00

(54) **PORTABLE TERMINAL AND TIME CORRECTION METHOD**

(30) Priority: 09.02.2011 JP 2011026546
(71) Applicant: NTT DOCOMO, INC., Chiyoda-ku Tokyo 100-6150 (JP)
(72) Inventor: ITO, Makoto, Tokyo 100-6150 (JP); YUNOKI, Kazufumi, Tokyo 100-6150 (JP); IDA, Takehiro, Tokyo 100-6150 (JP)
(74) Representative: Maury, Richard Philip
(86) International application number: PCT/JP2012/052646
(87) International publication number: WO 2012/108392

(57) **Abstract**

A mobile station includes a time information reception determining unit configured to determine whether time information is received from a residing network, a table configured to associate networks where the mobile station may reside with time zones for areas where the networks are operated, and a time adjustment unit configured to, in the case where it is not determined by the time information reception determining unit that the time information is received, refer to the table, and perform time adjustment based on the time zone corresponding to the network where the mobile station resides.

## Description

### TECHNICAL FIELD

The present invention relates to a mobile station.

### BACKGROUND ART

Some mobile stations are capable of being used in non-subscribed countries. In the case where a mobile station is capable of being used in non-subscribed countries, sometimes a roaming agreement is made between an operator of a subscribed county and operators of non-subscribed countries. Radio communication methods that are provided by operators include GSM (Global System for Mobile Communications) and WCDMA (Wideband Code Division Multiple Access). Further, they may include LTE (Long Term Evolution).

A mobile station operates in a home public land mobile network (PLMN) or in a home-equivalent public land mobile network. The mobile station selects a public land mobile network. As for operations for selecting a public land mobile network, two kinds of selecting methods are defined: automatic mode and manual mode. In the automatic mode, a PLMN list, in which PLMNs are listed in priority order, is used. Of the PLMNs that are available and permitted to be used, a PLMN with the highest priority is selected. In the manual mode, the mobile station shows available PLMNs to a user. Only in the case where the user manually selects a PLMN, the mobile station tries to get services from the selected PLMN.

Mobile stations can automatically adjust the time by receiving GMM Information (GPRS (General Packet Radio Service) Mobility Management Information) or MM Information (Mobility Management Information) from the network. For example, mobile stations can adjust the time based on at least one of a local time zone and a universal time and local time zone, which should be included in the GMM Information. When, for example, the power supply is turned ON, or the mobile station returns to a network coverage area, the time adjustment is automatically performed.

Technologies for time adjustment of mobile stations are known (for example, see Patent Document 1).

### RELATED ART DOCUMENT

[Patent Document 1] Japanese Patent Application Publication No.2005-198065

### SUMMARY OF THE INVENTION

### PROBLEM TO BE SOLVED BY THE INVENTION

Even in a same area, there may exist an operator that sends GMM Information and an operator that does not send GMM Information. Even when a mobile station resides in the coverage area of a network operated by an operator that does not send GMM Information, by having a user operating the mobile station, time adjustment can be manually performed.

In the mobile station, Universal time or Local time, and Time Zone are stored. The Universal time or the Local time can be of a time zone for an area in which a channel request is sent, or a time zone for a location area or a routing area of a cell in which the mobile station resides. For example, a user can adjust the time by manually switching the time zone.

But it is cumbersome to adjust the time manually. And sometimes it is possible to forget to adjust the time.

It is an object of a disclosed mobile station that even in the case where a mobile station resides in a network in which GMM Information or MM Information is not sent, it is possible to automatically adjust the time.

### MEANS FOR SOLVING THE PROBLEM

A disclosed mobile station of an embodiment of the present invention is a mobile station performing time adjustment, the mobile station including a time information reception determining unit configured to determine whether time information should be received from a residing network, a table configured to associate networks where the mobile station should reside with time zones for the area in which the networks are operated, and a time adjusting unit configured to, in the case where it is not determined by the time information reception determining unit that time information is received, referring to the table, perform the time adjustment based on the time zone that corresponds to the network in which the mobile station resides.

A disclosed time adjustment method of an embodiment of the present invention is a time adjustment method for a mobile station performing the time adjustment, including a time information reception determining step of determining whether time information should be received from a residing network, and a time adjusting step of, in the case where it is not determined by the time information reception determining step that time information should be received, referring to a table configured to associate networks where the mobile station should reside with time zones for the area in which the networks are operated, and performing the time adjustment based on the time zone that corresponds to the network in which the mobile station resides.

### EFFECT OF THE PRESENT INVENTION

According to the disclosed embodiment of the present invention, even in the case where a mobile station resides in a network in which GMM Information or MM Information is not sent, it is possible to automatically adjust the time.

### BRIEF DESCRIPTION OF THE DRAWINGS

FIG. 1 is a drawing illustrating a radio communication system of an embodiment.
FIG. 2 is a block diagram illustrating a mobile station of an embodiment.
FIG. 3 is a drawing illustrating an example of a PLMN time zone correspondence table.
FIG. 4 is a block diagram illustrating a mobile station of an embodiment.
FIG. 5 is a flowchart illustrating operations of a mobile station of an embodiment.
FIG. 6 is a block diagram illustrating a mobile station of a modified embodiment.
FIG. 7 is a flowchart illustrating operations of a mobile station of a modified embodiment.
FIG. 8 is a block diagram illustrating a mobile station of a modified embodiment.
FIG. 9 is a flowchart illustrating operations of a mobile station of a modified embodiment.

### EMBODIMENTS FOR CARRYING OUT THE INVENTION

In the following, embodiments of the present invention will be described with reference to the accompanying drawing. Note that the same referral numbers are used through out the figures when referring to the same functionalities, and the repeated same descriptions are omitted.

### <Embodiments>

### <Radio communication system>

A radio communication system, in which a mobile station 100 of a present embodiment is applied, will be described.

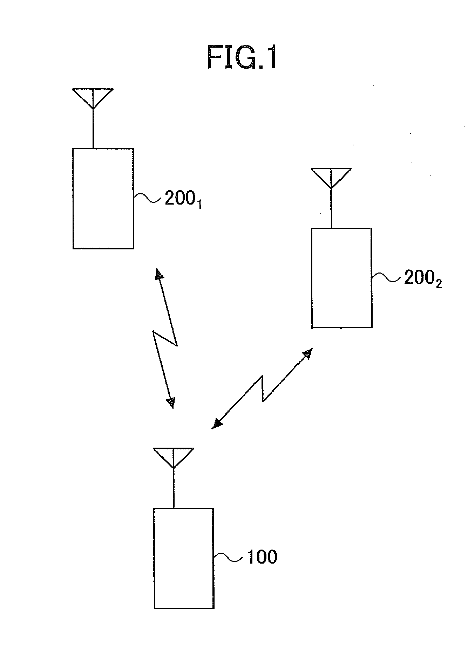

FIG. 1 is an example of a radio communication system to which the mobile station 100 is applied.

In the radio communication system, a mobile station 100 is included. In the radio communication system, base stations 200ₘ (m is an integer, m>0) are included. In FIG. 1, as an example, the case where m=2 is shown. Each of at least two electronic telecommunications carriers (hereinafter referred to as "operators") operates some of base stations 200ₘ. For example, a base station 200₁ and a base station 200₂ may be operated by different operators. For example, mobile country codes (MCCs) and mobile network codes (MNCs), of at least two operators that operate PLMNs to which the base stations 200ₘ belong, may be different.

The mobile station 100 determines whether time information should be received from a residing operator. A residing operator is an operator in whose network a location registration is made. For example, it is determined whether GMM Information or MM Information can be received from the residing network. In the case where GMM Information or MM Information can be received from the residing network, the mobile station 100 performs time adjustment based on information included in the GMM Information or the MM Information. To be more precise, based on at least one of a local time zone and a universal time and local time zone, which should be included in GMM Information, the mobile station 100 performs time adjustment. For example, when the power supply is turned ON, or when the mobile station 100 returns to a network coverage area, it performs time adjustment automatically.

In the case where GMM Information or MM Information cannot be received from the residing network, the mobile station 100 identifies the residing PLMN based on the notification information from the network, and performs time adjustment based on the PLMN. For example, the mobile station 100 includes a table (hereinafter referred to as "PLMN time zone correspondence table") configured to associate PLMNs with time zones, the time zones being for areas operated by the PLMNs. The mobile station 100 identifies the PLMN from the notification information. The mobile station 100, referring to the PLMN time zone correspondence table, sets the time zone that corresponds to the PLMN identified from the notification information.

In the following, "network" and "PLMN" are sometimes used to have the same meaning.

### <The mobile station>

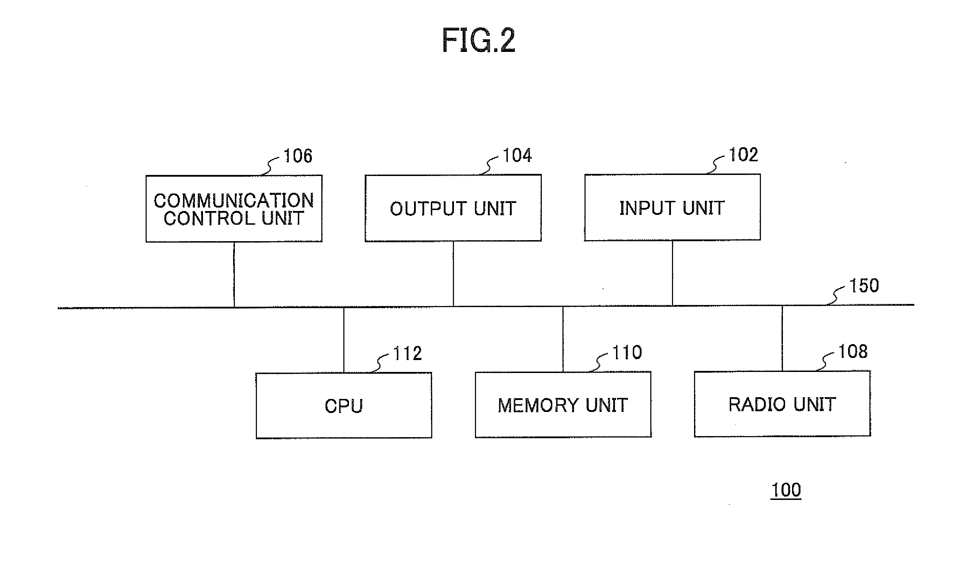

FIG. 2 is an example of the mobile station 100 of the present embodiment. In FIG. 2, a hardware configuration is mainly illustrated.

The mobile station 100 includes an input unit 102, an output unit 104, a communication control unit 106, a radio unit 108, a memory unit 110, and a central processing unit (CPU) 112. The functional blocks are connected by a bus 150. In the present embodiment, as an example, a mobile station is described. Not limited to the mobile station 100, the present embodiment can include any terminal device as long as it is capable of international roaming. For example, the present embodiment can include personal digital assistants (PDAs).

The central processing unit 112 controls the input unit 102, the output unit 104, the communication control unit 106, the radio unit 108, and the memory unit 110. The central processing unit 112 functions according to the program stored in the memory unit 110, and performs predefined processes.

The memory unit 110 includes applications and an operating system (OS). The applications are software that has functions to perform tasks, which a user executes on the mobile station 100. The operating system is software that provides hardware-abstracted interfaces to the application software.

Furthermore, in the memory unit 110, a PLMN time zone correspondence table is stored.

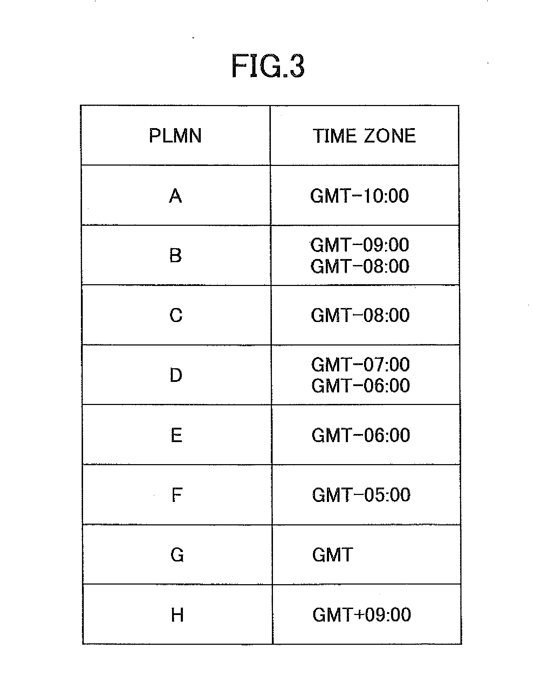

FIG. 3 is an example of the PLMN time zone correspondence table. In an example shown in FIG. 3, the time zone for the area operated by the "PLMN A" is "GMT (Greenwich Mean Time) -10:00", the time zones for the area operated by the "PLMN B" are "GMT -09:00" and "GMT -08:00", the time zone for the area operated by the "PLMN C" is "GMT -08:00", the time zones for the area operated by the "PLMN D" are "GMT -07:00" and "GMT -06:00", the time zone for the area operated by the "PLMN E" is "GMT -06:00", the time zone for the area operated by the "PLMN F" is "GMT - 05:00", the time zone for the area operated by the "PLMN G" is "GMT", and the time zone for the area operated by the "PLMN H" is "GMT +09:00". The reason why multiple time zones are associated with a PLMN is that it is the case where the operated area extends to a broad range, or that the operated area is close to the border of time zones. The standard time may not be limited to GMT, but other types, such as universal time, coordinated (UTC), may be used.

The input unit 102 is configured with, for example, a key board or a mouse, and is a device used for inputting instructions or data to the mobile station 100. Also, it can be configured with a touch panel. Also, the input unit 102 can be configured with, for example, a microphone, which is used for inputting voice sound generated by a user. The voice may include an instruction for the mobile station 100. The instruction includes an instruction for the operating system or an application.

The output unit 104 is, for example, configured with a display, and displays process statuses or process results by the mobile station 100. Also, the output unit 104 may be, for example, configured by a speaker, and may output sound to the user. The process statuses and process results include those by the operating system or the application. The display includes a liquid crystal display (LCD), a CRT (Cathode Ray Tube) display, a plasma display (PDP: Plasma Display Panel), an organic EL (electro-luminescence) display, etc.

The communication control unit 106 generates control information for connecting the mobile station 100 to the network to be connected, and analyzes control information sent from a base station to be connected.

The radio unit 108, controlled by the central processing unit 112, performs radio communication with a base station 200ₘ by a predefined radio communication method. The radio communication method includes GSM and W-CDMA. Also, LTE can be included. For example, the radio unit 108 transforms the control information generated by the communication control unit 106 into radio signals, and transmits them. Also, it transforms radio signals from the base station 200ₘ into base band signals.

### <Functions of the mobile station>

Processes performed by the mobile station 100 include a process for determining whether time information can be received from the residing network. Also, processes performed by the mobile station 100 include a process for performing time adjustment based on the time information in the case where time information can be received from the residing network. Also, processes performed by the mobile station 100 include a process for performing time adjustment based on the connected network in the case where time information cannot be received from the residing network.

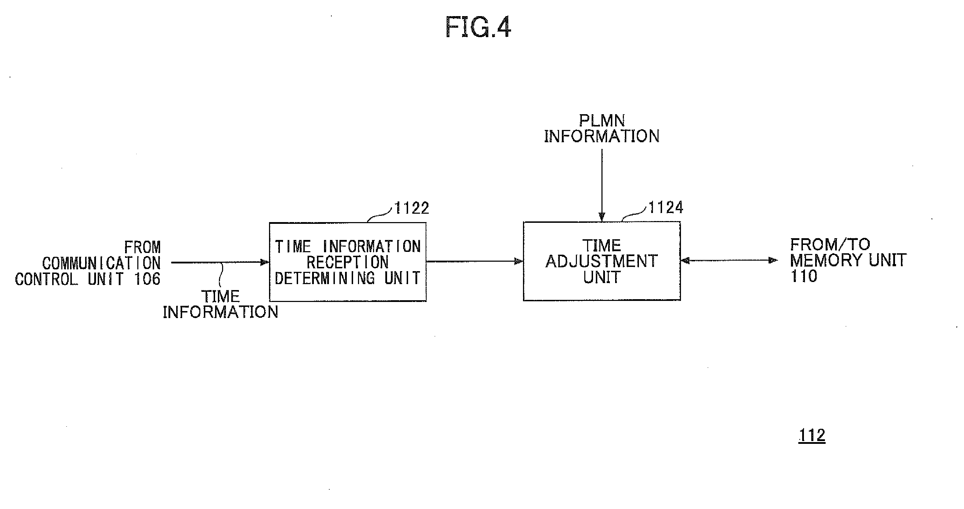

FIG. 4 is a functional block diagram illustrating an example of the mobile station 100 of the present embodiment. In FIG. 4, functions performed by the central processing unit 112 are mainly illustrated.

The mobile station 100 includes a time information reception determining unit 1122. To the time information reception determining unit 1122, the time information, which is received by the mobile station 100, is inputted from the communication control unit 106. For example, in the case where GMM Information or MM Information is received by the mobile station 100, the GMM Information or the MM Information is inputted. In the case where GMM Information or MM Information is inputted from the communication control unit 106, the time information reception determining unit 1122 inputs the GMM Information or MM Information to a time adjustment unit 1124. In the case where GMM Information or MM Information is not inputted from the communication control unit 106, the time information reception determining unit 1122 notifies the time adjustment unit 1124 that time information will not be received.

The mobile station 100 includes the time adjustment unit 1124. The time adjustment unit 1124 is connected to the time information reception determining unit 1122 and the memory unit 110. To the time adjustment unit 1124, information that indicates a currently connected PLMN is inputted.

In the case where the GMM Information or MM Information is inputted by the time information reception determining unit 1122, the time adjustment unit 1124 adjusts the time based on the GMM Information or the MM Information. In the case where it is notified by the time information reception determining unit 1122 that time information will not be received, the time adjustment unit 1124, referring to a PLMN time zone correspondence table that is stored in the memory unit 110, adjusts the time based on the time zone corresponding to the PLMN in which the mobile station 100 resides. For example, the time adjustment unit 1124 calculates the time difference between the time zone currently set and the time zone corresponding to the PLNM. It adjusts the present time by the amount of the time difference.

### <Operation of the mobile station>

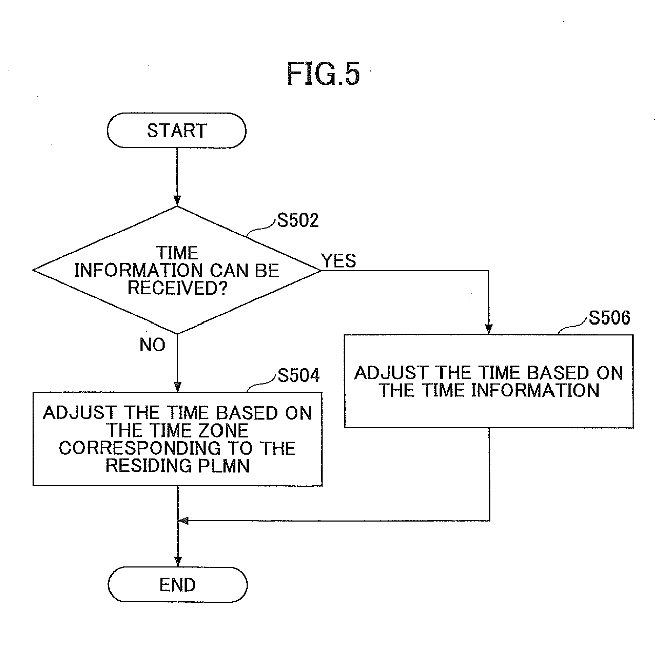

FIG. 5 is an example of the operation of the mobile station 100 of the present embodiment.

The mobile station 100 determines whether time information can be received (step S502). That is, the time information reception determining unit 1122 determines whether time information can be received from the residing network.

In the case where it is determined that time information can be received (step S502: YES), the mobile station 100 adjusts the time based on the time information that is received by the mobile station 100 (step S506). That is, the time adjustment unit 1124 adjusts the time based on the time information that is inputted by the time information reception determining unit 1122.

In the case where it is determined that time information cannot be received (step S502: NO), the mobile station 100 adjusts the time based on the time zone corresponding to the residing PLMN. That is, the mobile station 100 can identify the residing PLMN from the notification information that is sent from the network. The time adjustment unit 1124, referring to the PLMN time zone correspondence table that is stored in the memory unit 110, identifies the time zone that corresponds to the residing PLMN. The time adjustment 124 adjusts the time based on the time zone identified based on the residing PLMN.

In the present embodiment, instead of the PLMN, a Mobile Country Code (MCC) may be used. In this case, the time zone corresponding to the MCC of the residing network is obtained based on a table configured to associate an MCC with a time zone of the area operated in by the MCC. The time adjustment is performed based on the time zone corresponding to the MCC of the residing network.

Furthermore, instead of the time zone, a universal time may be used.

According to the present embodiment, the time adjustment is automatically performed even in the case where time information is not provided by the residing network.

### <Modified embodiment (No.1)>

In a modified embodiment of the present invention, a radio communication system, to which the mobile station 100 is applied, is about the same as the system described referring to FIG. 1.

In the modified embodiment of the present invention, the mobile station 100 is about the same as the mobile station described referring to FIG. 2.

### <Functions of the mobile station 100>

Processes performed by the mobile station 100 include, in addition to the process described in the first embodiment of the present invention, a process in which, in the case where there are multiple time zones corresponding to the area operated in by the residing PLMN when the time adjustment is performed based on the residing PLMN in the case where time information cannot be received from the residing network, it is reported that the time adjustment cannot be performed. Because it cannot be determined based on which time zone the time adjustment should be performed. Furthermore, it may be possible to notify the user that the user should manually adjust the time.

For example, in the case where the residing PLMN is "PLMN B" or "PLMN D' in FIG. 3, because there are multiple corresponding time zones, it cannot be determined based on which time zone the time adjustment should be performed.

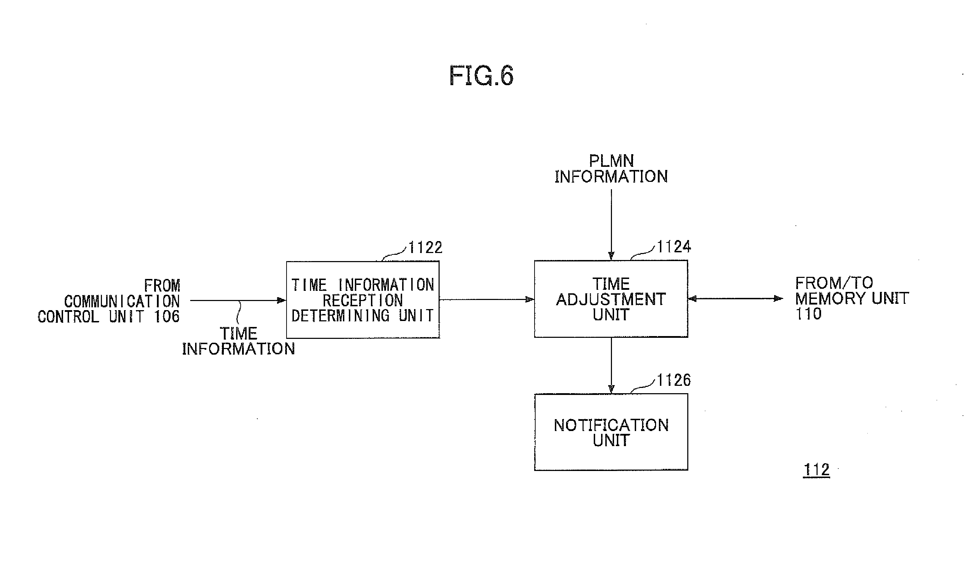

FIG. 6 illustrates a functional block diagram of the mobile station 100 of the modified present embodiment.

In FIG. 6, functions performed by the central processing unit 112 are mainly illustrated. Different points, compared to the mobile station described in the first embodiment, will be mainly described.

In the case where it is reported by the time information reception determining unit 1122 that time information will not be received, the time adjustment unit 1124, referring to the PLMN time zone correspondence table that is stored in the memory unit 110, performs the time adjustment based on the time zone corresponding to the PLMN in which the mobile station 100 resides. In the case where there are multiple time zones corresponding to the residing PLMN when performing the time adjustment, the time adjustment unit 1124 determines that it cannot perform the time adjustment, because it cannot be determined based on which time table the time adjustment should be performed. In the case where it determines that the time adjustment cannot be performed, the time adjustment unit 1124 notifies the notification unit 1126 that the time adjustment cannot be performed. Furthermore, it may be possible to automatically move to a time adjustment setting display so that the user can manually perform the time adjustment. Also, it may be possible to let the user select a time zone from the limited multiple time zone candidates.

The mobile station 100 includes a notification unit 1126. The notification unit 1126 is connected to the time adjustment unit 1124. In the case where it is notified by the time adjustment unit 1124 that the time adjustment cannot be performed, the notification unit 1126 notifies to the user that the time adjustment cannot be performed. Furthermore, the notification unit may notify the user that the user should manually adjust the time. For example, the notification unit 1126 may display on the output unit 104 that the time adjustment cannot be performed and that the user should manually adjust the time.

### <Operation of the mobile station>

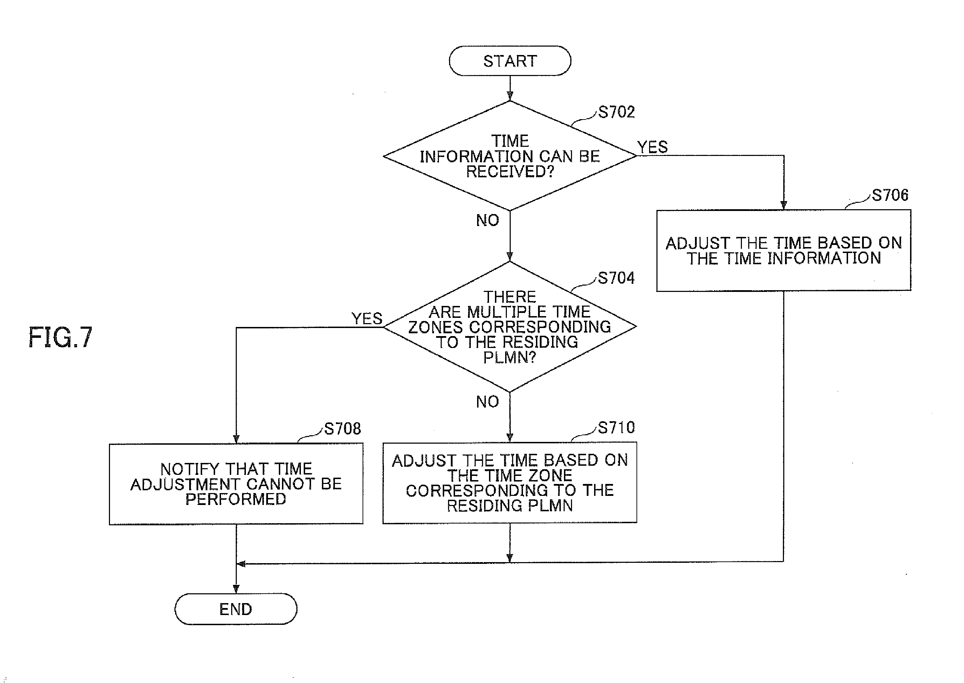

FIG. 7 is an example of an operation of the mobile station 100 of the modified present embodiment.

The mobile station 100 determines whether it can receive time information (step S702). That is, the time information reception determining unit 1122 determines whether time information from the residing network can be received.

In the case where it is determined that time information can be received (step S702: YES), the mobile station 100 performs the time adjustment based on the time information that is received by the mobile station 100 (step S706). That is, the time adjustment unit 1124 adjusts the time based on the time information that is inputted by the time information reception determining unit 1122.

In the case where it is determined that time information cannot be received (step S702: NO), the mobile station 100, referring to the PLMN time zone correspondence table, determines whether there are multiple time zones corresponding to the residing PLMN (step S704). That is, the mobile station 100 can identify the residing PLMN from the notification information that is sent from the network. In the case where it is reported from the time information reception determining unit 1122 that time information will not be received, the time adjustment unit 1124, referring to the PLMN time zone correspondence table, determines whether there are multiple time zones corresponding to the residing PLMN.

In the case where it is determined that there are multiple time zones corresponding to the residing PLMN (step S704: YES), the mobile station 100 reports that time adjustment cannot be performed (step S708). That is, in the case where it is reported from the time adjustment unit 1124 that there are multiple time zones corresponding to the residing PLMN, the notification unit 1126 reports that the time adjustment cannot be performed.

In the case where it is not determined that there are multiple time zones corresponding to the residing PLMN (step S704: NO), the mobile station 100 adjusts the time based on the time zone corresponding the residing PLMN. That is, the time adjustment unit 1124, referring to the PLMN time zone correspondence table that is stored in the memory unit 110, identifies the time zone corresponding to the residing PLMN, and adjusts the time based on the time zone.

According to the modified embodiment of the present invention, a user can be prompted to manually adjust the time in the case where time adjustment cannot be performed based on the PLMN.

### <Modified embodiment (No.2)>

In a modified embodiment of the present invention, a radio communication system, to which the mobile station 100 is applied, is about the same as the system described referring to FIG. 1.

The mobile station of a modified embodiment of the present invention is about the same as the mobile station described referring to FIG. 2.

### <Functions of the mobile station>

Processes performed by the mobile station 100 include, in addition to the process described in the first embodiment of the present invention, a process in which, it is determined whether the previous residing PLMN is the same as the residing PLMN. Based on the determination result, the time adjustment is not performed in the case where the residing PLMN is the same as the previous residing PLMN, and the time adjustment is performed in the case where the residing PLMN is not the same as the previous residing PLMN and time information cannot be received.

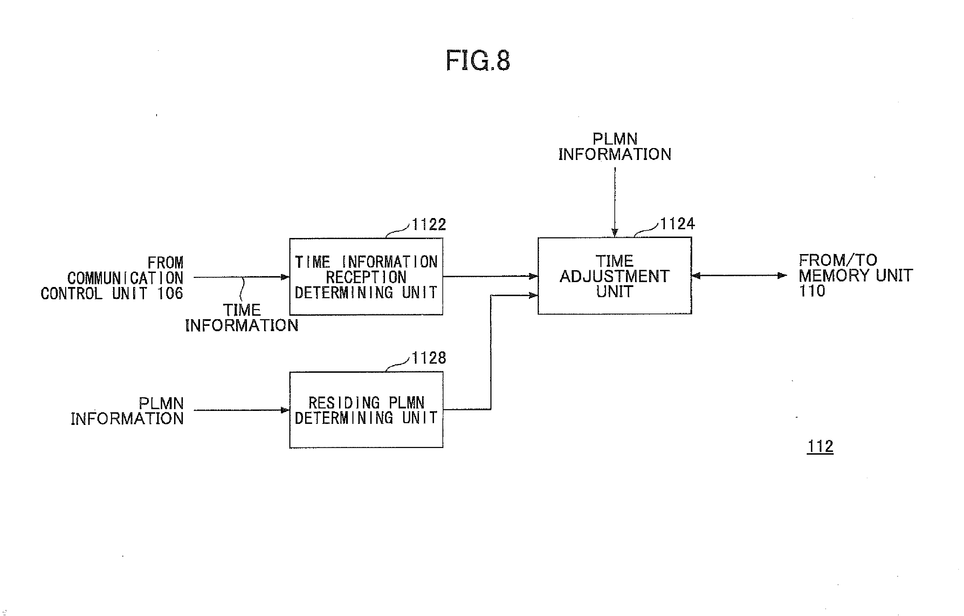

FIG. 8 illustrates a functional block diagram of the modified present embodiment of the mobile station 100.

In FIG. 8, functions performed by the central processing unit 112 are mainly illustrated. Different points, compared to the mobile station described in the first embodiment, will be mainly described.

The mobile station 100 includes a residing PLMN determining unit 1128. The residing PLMN determining unit 1128 is connected to the time adjustment unit 1124. To the residing PLMN determining unit 1128, information indicating a residing PLMN is inputted. Based on the information indicating the residing PLMN, the residing PLMN determining unit 1128 determines whether the previous residing PLMN is the same as the residing PLMN. The residing PLMN determining unit 1128 inputs the determination result to the time adjustment unit 1124.

In the case where the determination result, which is inputted from the residing PLMN determining unit 1128, is the one that indicates that the previous residing PLMN is the same as the residing PLMN, the time adjustment unit 1124 does not perform the time adjustment, because even if it performs the time adjustment based on the residing PLMN, the adjusted time should be the same as the time currently set. In the case where the determination result, which is inputted from the residing PLMN determining unit 1128, is the one that indicates that the previous residing PLMN is different from the residing PLMN, the time adjustment unit 1124 performs the time adjustment in the same manner as the embodiment described above.

### <Operation of the mobile station>

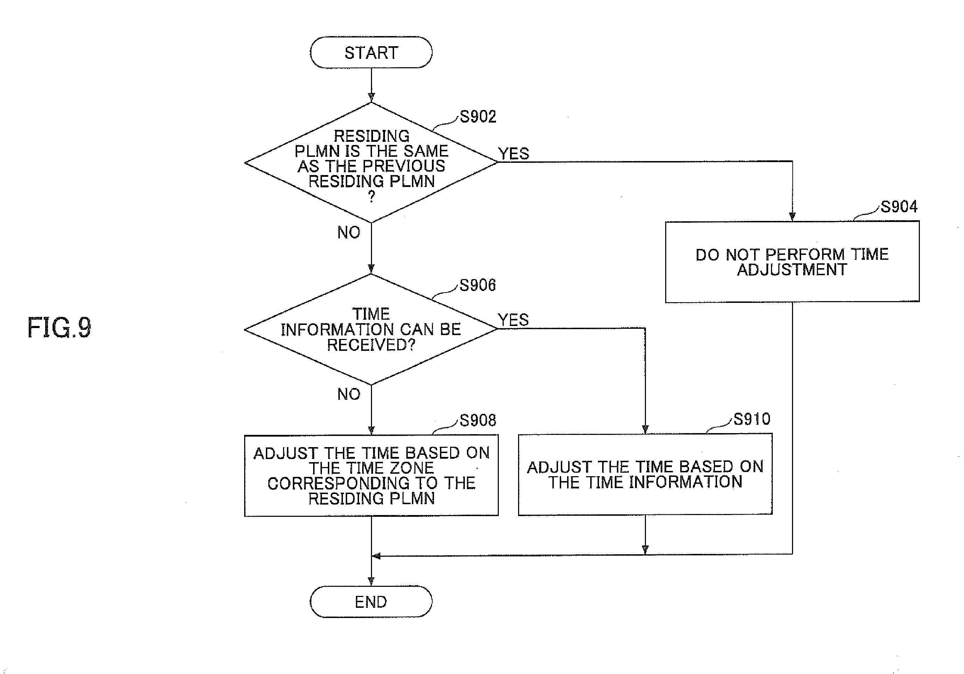

FIG. 9 is an example of the operation of the mobile station 100 of the modified present embodiment.

The mobile station 100 determines whether the residing PLMN is the same as the previous residing PLMN (step S902). That is, the residing PLMN determining unit 1128 retains information that indicates the previous residing PLMN. The residing PLMN determining unit 1128 determines, based on the information indicating the residing PLMN, whether it is the same as the previous residing PLMN.

In the case where it is determined that the residing PLMN is the same as the previous residing PLMN (step S902: YES), the mobile station 100 does not perform the time adjustment (step S904). That is, in the case where the determination result, which is inputted from the residing PLMN determining unit 1128, indicates that the residing PLMN is the same as the previous residing PLMN, the time adjustment unit 1124 does not perform the time adjustment.

In the case where it is determined that the residing PLMN is different from the previous residing PLMN (step S902: NO), the mobile station 100 determines whether it can receive time information (step S906). That is, the time information reception determining unit 1122 determines whether time information can be received from the residing network.

In the case where it is determined that time information can be received (step S906: YES), the mobile station 100 performs the time adjustment based on the time information that is received by the mobile station 100 (step S910). That is, the time adjustment unit 1124 adjusts the time based on the time information that is inputted from the time information reception determining unit 1122.

In the case where it is determined that time information cannot be received (step S906: NO), the mobile station 100 adjusts the time based on the time zone corresponding to the residing PLMN. That is, the mobile station 100 can identify the residing PLMN from the notification information that should be sent from the network. The time adjustment unit 1124, referring to the PLMN time zone correspondence table that should be stored in the memory unit 110, identifies the time zone corresponding to the residing PLMN. The time adjustment unit 1124 performs time adjustment based on the time zone identified based on the residing PLMN.

In the modified present embodiment, instead of PLMNs, mobile country codes may be used. In this case, it is determined whether the residing MCC is the same as the previous residing MCC.

According to the modified present embodiment, in the case where the residing PLMN is the same as the previous residing PLMN, the time adjustment is not performed and unnecessary processes can be omitted.

Regarding embodiments including embodiments above, the followings are further disclosed below.

According to the present embodiment, a mobile station performing time adjustment is provided. The mobile station includes a time information reception determining unit configured to determine whether time information is received from a residing network, a table as a PLMN time zone correspondence table configured to associate networks where the mobile station may reside with time zones for areas where the networks are operated, and a time adjustment unit configured to, referring to the table in the case where it is not determined by the time information reception determining unit that time information can be received, perform time adjustment based on the time zone corresponding to the network where the mobile station resides.

The mobile station may include a residing network determining unit as a residing PLMN determining unit configured to determine whether the residing network is the same as the previous residing network, and the time adjustment unit may perform the time adjustment in the case where it is determined by the residing network determining unit that the residing network or country is different from the previous residing network or country.

In the mobile station, the table may be a table configured to associate public land mobile networks as networks where the mobile station may reside with time zones for areas in which the public land mobile networks are operated, the time adjustment unit may, referring to the table, perform time adjustment based on the time zone corresponding to the public land mobile network in which the mobile station resides.

In the mobile station, the table may be a table configured to associate mobile country codes as networks where the mobile station may reside with time zones for areas in which the mobile country codes are applied, and the time adjustment unit may, referring to the table, perform time adjustment based on the time zone corresponding to the mobile country code in which the mobile station resides.

In the mobile station, the time adjustment unit may determine whether there are multiple time zones corresponding to the mobile country code in which the mobile station resides, and the mobile station may include a notification unit configured to, in the case where there are multiple time zones corresponding to the mobile country code in which the mobile station resides, report that the time adjustment is impossible.

Also, according to the present embodiment, a time adjustment method in a mobile station that performs time adjustment is provided. The time adjustment method includes a time information reception determining step for determining whether time information can be received from a residing network, and a time adjustment step for, in the case where it is not determined by the time information reception determining step that the information should be received from the residing network, referring to a table configured to associate networks where the mobile station may reside with time zones for areas in which the network is operated, performing the time adjustment based on the time zone corresponding to the network in which the mobile station resides.

For the sake of convenience, the present embodiments are described using specific numbers in order to facilitate understanding of the invention, but these numbers are used just as an example and, unless otherwise noted, any appropriate number can be used.

The present invention has been described above referring to specific embodiments, but each embodiment is used just as an example, and a person skilled in the art would easily understand various modified embodiments, amended embodiments and replacement embodiments. For the sake of convenience, devices of the present embodiments are described using functional block diagrams, but those devices can be implemented as hardware, software, or combination of both. The present invention is not limited to these embodiments above, but includes various variations and modifications which may be made without departing from the spirit of the present invention.

The present application is based on and claims the benefit of priority of Japanese Priority Application No.2011-026546 filed on February 9, 2011, the entire contents of which are hereby incorporated by reference.

### DESCRIPTION OF THE REFERENCE NUMERALS

100 Mobile station
102 Input unit
104 Output unit
106 Communication control unit
108 Radio unit
110 Memory unit
112 Central processing unit
1122 time information reception determining unit
1124 time adjustment unit
1126 notification unit
1128 Residing PLMN determining unit
200ₘ (m is an integer, m>0) Base station

## Claims

1. A mobile station performing time adjustment, the mobile station comprising:
a time information reception determining unit configured to determine whether time information is received from a residing network,
a table configured to associate networks, where the mobile station may reside, with time zones for areas where the networks are operated, and
a time adjustment unit configured to, in the case where it is not determined by the time information reception determining unit that the time information is received, refer to the table, and perform time adjustment based on the time zone corresponding to the residing network where the mobile station resides.

2. The mobile station as claimed in claim 1, further comprising a residing network determining unit configured to determine whether the residing network is the same as a previous residing network, wherein the time adjustment unit, in the case where it is determined by the residing network determining unit that the residing network or country is different from the previous residing network or country, performs the time adjustment.

3. The mobile station as claimed in claim 1 or 2, wherein the table is configured to associate public land mobile networks as the networks where the mobile station may reside with the time zones for areas where the public land mobile networks are operated, and the time adjustment unit, referring to the table, performs the time adjustment based on the time zone corresponding to the public land mobile network where the mobile station resides.

4. The mobile station as claimed in claim 1 or 2, wherein the table is configured to associate mobile county codes as the networks where the mobile station may reside with the time zones for areas where the mobile country code is applied, and the time adjustment unit, referring to the table, performs the time adjustment based on the time zone corresponding to the mobile country code where the mobile station resides.

5. The mobile station as claimed in claim 4, further comprising a notification unit, wherein
the time adjustment unit determines whether there are multiple time zones corresponding to the mobile country code where the mobile station resides, and
the notification unit, in the case where it is determined by the time adjustment unit that there are multiple time zones corresponding to the mobile country code where the mobile station resides, reports that the time adjustment is impossible.

6. A time adjustment method of a mobile station performing time adjustment, the time adjustment method comprising:
a time information reception determining step of determining whether time information is received from a residing network, and
a time adjustment step of, in the case where it is not determined that time information is received from a residing network, referring to a table configured to associate networks where the mobile station may reside with time zones for areas where the networks are operated, and performing time adjustment based on the time zone corresponding to the network where the mobile station resides.
